# EUROPÄISCHE PATENTSCHRIFT

(11) **EP 0 525 512 B1**
(45) Veröffentlichungstag und Bekanntmachung des Hinweises auf die Patenterteilung: **10.05.1995**
(21) Anmeldenummer: 92112047.3
(22) Anmeldetag: 15.07.1992
(51) Int. Cl.: F16H 7/12

(54) **Vorrichtung zum Spannen von Treibriemen**
Transmission belt tensioning device
Dispositif pour tendre une courroie de transmission

(30) Priorität: 01.08.1991 DE 4125494
(43) Veröffentlichungstag der Anmeldung: 03.02.1993
(73) Patentinhaber: Continental Aktiengesellschaft, 30165 Hannover (DE)
(72) Erfinder: Bonkowski, Manfred, W-3000 Hannover 1 (DE)

(56) Entgegenhaltungen:
- EP-A- 0 188 077
- EP-A- 0 351 630
- WO-A-89/09896
- DE-A- 3 714 645

## Beschreibung

Die Erfindung betrifft eine Vorrichtung zum Spannen von Treibriemen oder Antriebsketten mit einer Spannfeder zum Anpressen eines über eine Welle drehbar in einem Gehäuse gelagerten Spannhebels gemäß dem Oberbegriff des Patentanspruchs 1.

Aus der DE 39 29 753 C1 ist eine gattungsmäßige Vorrichtung zum spannen von Treibriemen bekannt. Diese Spannvorrichtung weist einen in Spannrichtung des Treibriemens wirksamen Freilauf auf. In entgegengesetzter Drehrichtung der Spannhebelwelle wird eine konstante Dämpfung wirksam, die von einer drehbaren, durch Federbelastung gegen ein stationäres Reibteil gepreßten Reibscheibe erzeugt wird.

Aus der DE 37 14 645 C2 ist eine Spannvorrichtung bekannt, die einen mit einer Spannrolle versehenen Schwenkarm über eine Welle drehbar in einem Gehäuse gelagert aufweist. Dieser Spannvorrichtung ist ein in Zuspannrichtung des Treibriemens wirksamer Freilauf zugeordnet. In entgegengesetzter Richtung ist ein konisches Reibhülsenpaar wirksam, dessen äußere als Dämpfungsbuchse ausgebildete Reibungshülse eine mit dem Freilauf zusammenwirkende Hülse umgibt. In Spannrichtung ist der Freilauf gelöst, so daß die Bewegungen der Spannrolle ungedämpft erfolgen können. In der Entspannungsrichtung des Riemens sperrt der Freilauf, so daß in dieser Richtung die Bewegungen der Spannrolle gedämpft werden. Die um die Dämpfungsbuchse verlaufenden Windungen der Verdrehfeder ziehen sich beim Vorspannen der Spannrolle in radialer Richtung zusammen und pressen damit die Dämpfungsbuchse gegen die Hülse des Freilaufs, so daß durch die auftretende Reibung die Bewegung der Spannrolle entgegen der Zuspannrichtung gedämpft werden.

Die mit einem Freilauf versehene Spannvorrichtung ist technisch störanfällig, da die Wälzkörper des Freilaufs an den Rampenausbildungen einen Verschleiß verursachen. Außerdem können von dieser Spannvorrichtung Schwingungen im Bereich von etwa 10-30 Hz nicht als Dauerbelastung kompensiert werden. Schwingungen in diesem Bereich sind beim Einsatz von Riementrieben am Verbrennungsmotor typisch.

Der Erfindung liegt die Aufgabe zugrunde, eine Spannvorrichtung der eingangs beschriebenen Art zu schaffen, die sich durch eine geringere Störanfälligkeit auszeichnet und zum Einsatz bei Antrieben eignet, bei denen Schwingungen im genannten Bereich dauerhaft gedämpft werden.

Die Aufgabe wird erfindungsgemäß durch die im Kennzeichen des Anspruchs 1 genannten Merkmale gelöst.

In der Zuspannrichtung des Treibriemens kann sich der Spannhebel ungebremst unter der Kraft der großen Spannfeder nachbewegen. Das aufgrund der separaten Federdrehbelastung am ersten Reibkörper auftretende Drehmoment ist dabei größer als das zwischen erstem und zweitem Reibkörper auftretende Reibmoment. Dadurch wird der erste Reibkörper drehend der Welle des Spannhebels und damit dem Mitnehmer auf der Welle nachgeführt. Mitnehmer und erster Reibkörper bleiben in praktisch allen Betriebszuständen aneinanderliegend; läuft der Mitnehmer bei extrem kurzen Stößen oder Schwingungen vor, so wird das Aneinanderliegen von Mitnehmer und erstem Reibkörper durch die Federdrehbelastung des Reibkörpers sehr rasch wieder erreicht.

In der Entspannungsrichtung des Treibriemens wird die Bewegung des Spannhebels gebremst, weil der Spannhebel gegen das Reibmoment zwischen den Reibkörpern, gegen die Federdrehbelastung des ersten Reibkörpers und die große Spannfeder arbeiten muß. Durch diese Ausbildung steht die Dämpfung auch bei Schwingungen im Bereich von etwa 10-30 Hz sofort zur Verfügung.

Eine vorteilhafte Ausgestaltung der Erfindung wird im Anspruch 2 gekennzeichnet.

In der Zuspannrichtung des Treibriemens kann sich die Welle mit dem ortsfesten radialen Mitnehmer frei in Zuspannrichtung nachdrehen. Der erste Reibkörper, der koaxial auf der Welle angeordnet ist, wird aufgrund seiner Federdrehbelastung sofort nachgeführt. In der Entspannungsrichtung des Treibriemens tritt die Dämpfung sofort ein, da der radiale Mitnehmer gegen den segmentartigen Vorsprung des ersten Reibkörpers wirkt.

Eine weitere vorteilhafte Ausgestaltung der Erfindung wird im Anspruch 3 gekennzeichnet.

Eine weitere vorteilhafte Ausgestaltung der Erfindung wird im Anspruch 4 gekennzeichnet. Diese Ausbildung erlaubt auf einfache Art einen Verschleißausgleich der beiden Reibkörper. Durch die axiale Verspannung ergibt sich die erforderliche Normalkraft in den Reibflächen.

Die im Anspruch 5 offenbarte vorteilhafte Ausgestaltung der Erfindung hat einen äußerst platzsparenden Aufbau.

Die Ausbildung gemäß Anspruch 6 vereinfacht die axiale Führung der Welle und minimiert die unerwünschten Dämpfungsverluste der Spannvorrichtung in Zuspannrichtung.

In vorteilhafter Ausgestaltung der Erfindung ist die Vorrichtung gemäß Anspruch 7 derart ausgebildet, daß der erste Reibkörper als Trägerbuchse konzentrisch auf der Welle des Spannhebels angeordnet ist und einen senkrecht zur Drehachse angeordneten Flansch aufweist.

Diese Ausbildung ergibt eine günstigere Bauweise der Vorrichtung, weil die Grundfläche des Flansches als Reibfläche ausgenutzt werden kann.

Eine weitere vorteilhafte Ausführungsform der Erfindung wird im Anspruch 8 gekennzeichnet. Die Fertigung der Spannvorrichtung wird vereinfacht, da die Reibkörper aus zylindrischen Teilen bestehen. Die Federkraft wird für die wirkende Normalkraft zwischen den Reibflächen besser ausgenutzt, weil die Federbelastung senkrecht zu den Reibflächen steht.

Die Ausbildung gemäß Anspruch 9 ergibt eine platzsparende Anordnung der die Nachführung des ersten Reibkörpers verursachenden Schraubenfeder. Die Schraubenfeder wirkt axial und in Umfangsrichtung.

Die im Anspruch 10 gekennzeichnete Ausbildung hat den Vorteil, daß die Wand des Gehäuses als zweiter Reibkörper benutzt wird und somit der technische Aufbau der Vorrichtung weniger aufwendig ist.

Ist der federseitige Bereich des Flansches entsprechend der Wicklungssteigung der Rückstellfeder geformt, wird die axiale Beaufschlagung der Trägerbuchse gleichmäßiger.

Eine weitere vorteilhafte Ausgestaltung der Erfindung wird im Anspruch 12 gekennzeichnet. Die Verlängerungen des Hülsenansatzes des Spannhebels, die konzentrisch zur Welle des Spannhebels angeordnet sind, wirken als radiale Mitnehmer für den ersten, verdrehbaren Reibkörper. Die kreisringförmigen Ausnehmungsabschnitte im Flansch des ersten Reibkörpers sind derart bemessen, daß die Verlängerungen eine freie Umfangsbewegung in Zuspannrichtung des Treibriemens frei ausführen können. In Entspannungsrichtung des Treibriemens liegen die Verlängerungen am entgegengesetzten Ende der Ausnehmungen an. Neben einer kostengünstigeren Bauweise der Vorrichtung hat diese Ausbildung mit der koaxialen Anordnung der radial wirkenden Mitnehmer den Vorteil, daß der Hülsenansatz des Spannhebels zusätzlich als Führungshülse für die innerhalb des Gehäuses angeordnete Spannfeder dient.

Durch die Erfindung wird eine Spannvorrichtung mit einer geringen Anzahl beweglicher Teile geschaffen, die bei guter Funktionssicherheit eine hohe Standzeit aufweist.

Anhand der Zeichnung werden nachstehend fünf Ausführungsbeispiele der Erfindung näher erläutert. Es zeigt
- Fig. 1: eine Spannvorrichtung mit richtungsabhängiger Reibungsdämpfung im Schnitt,
- Fig. 2: einen Querschnitt durch den Reibungsdämpfer gemäß Linie II-II in Fig. 1,
- Fig. 3: eine modifizierte Ausführungsform einer Spannvorrichtung mit richtungsabhängiger Reibungsdämpfung,
- Fig. 4: eine Spannvorrichtung mit einem Reibungsdämpfer, der senkrecht zur Schwenkachse angeordnete Reibungsflächen aufweist,
- Fig. 5: einen Schnitt durch die Reibungsdämpfungsvorrichtung in Fig. 4 gemäß Linie V-V.
- Fig. 6: eine modifizierte Ausführungsform eines Reibungsdämpfers mit senkrecht angeordneten Reibungsflächen,
- Fig. 7: einen Schnitt durch die Reibungsdämpfungs-Vorrichtung in Fig. 6 gemäß Linie VII-VII,
- Fig. 8: eine weitere modifizierte Ausführungsform eines Reibungsdämpfers mit senkrecht angeordneten Reibungsflächen,
- Fig. 9: einen Schnitt durch die Reibungsdämpfungsvorrichtung in Fig. 8 gemäß Linie IX-IX.

An einem feststehenden Gehäuse 11 ist das Ende einer Spannfeder 12 fest angeordnet, die mit ihrem anderen Ende an einem Spannhebel 14 befestigt ist und aufgrund der Federvorspannung die am Spannhebel 14 befestigte Spannrolle 15 in Richtung auf den hier nicht gezeigten Riementrieb spannt.

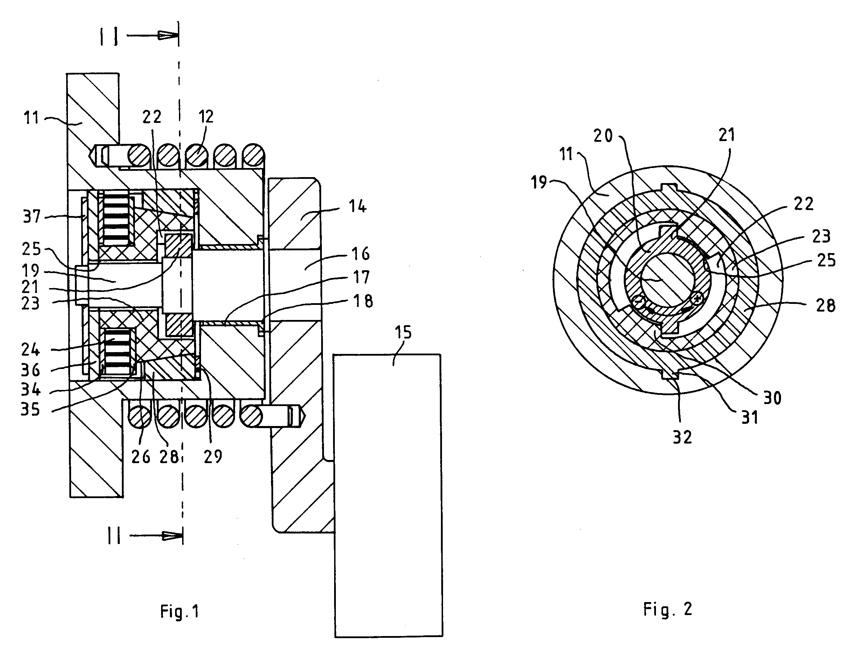

Der Spannhebel 14 ist über eine Welle 16 im Gehäuse 11 drehbar gelagert. Dazu ist eine Zentralbohrung 17 im Gehäuse 11 mit einer Gleitbuchse 18 versehen. An diesen Lagerabschnitt der Welle 16 schließt sich ein Wellenabschnitt 19 an, der benachbart zum Lagerabschnitt der Welle 16 einen mit der Welle fest verbundenen Ring 20 (Fig. 2) mit zwei diametral gegenüberliegenden, nach außen ragenden Mitnehmern 21 aufweist. Die Mitnehmer 21 ragen in innere Ausnehmungen 22 eines rotationssymmetrischen, drehbaren Reibkörpers 23, der durch eine sich im Gehäuse 11 abstützende Spiralfeder 24 in Zuspannrichtung beaufschlagt ist und eine Stufenbohrung 25 aufweist. Durch die Ausnehmungen 22 werden in der Stufenbohrung 25 in deren erweitertem Bereich segmentartige Vorsprünge 30 gebildet.

Der Reibkörper 23 weist eine konische Außenmantelfläche 26 auf, über die eine drehfest mit dem Gehäuse verbundene Reibhülse 28 als zweiter Reibkörper geschoben ist, die durch eine Wellfederscheibe 29 mit ihrer konischen Innenfläche auf den Außenkonus des Reibkörpers 23 gepreßt wird. Der feststehende Reibkörper 28 wird über achsparallele Führungsleisten 31 in entsprechenden Ausnehmungen 32 des Gehäuses 11 geführt (Fig. 2).

Die Spiralfeder 24 umgibt den Reibkörper 23 an seinem Ende und ist von zwei Anlaufscheiben 34 und 35 begrenzt. Die den Reibungsdämpfer aufnehmende, stufenförmige Zentralbohrung 17 des Gehäuses 11 ist durch einen eingepreßten Gehäusedeckel 36 abgeschlossen, der von dem Ende der Welle 16 durchdrungen ist, die durch eine axial feststehende Sicherungsscheibe 37 in ihrer axialen Lage fixiert ist.

Wird die Welle 16 in der Zuspannrichtung des Treibriemens, die in Fig. 2 durch das Pluszeichen gekennzeichnet ist, gedreht, so laufen die Mitnehmer 21 frei. Das bedeutet, daß in dieser Bewegungsrichtung keine Reibungsdämpfung vorliegt. Das Nachspannen des Treibriemens erfolgt praktisch verzögerungsfrei, so daß die erforderliche Trumkraft nicht unterschritten wird, da sonst der Riemen durchrutschen würde.

Die Spiralfeder 24 sorgt bei Drehung der Welle 16 in Zuspannrichtung für die Nachführung des Reibkörpers 23.

Bei Drehung der Welle 16 in negativer Richtung wird der Reibkörper 23 über die Mitnehmer 21 relativ zum in Umfangsrichtung feststehenden Reibkörper 28 verdreht. Die Wellfederscheibe 29 verspannt den Reibkörper 28 gegen den Reibkörper 23. Dadurch ergibt sich die erforderliche Verspannung der Reibflächen gegeneinander, und außerdem können Fertigungstoleranzen und evtl. auftretender Verschleiß ausgeglichen werden. Durch die an der konischen Berührungsfläche auftretende Reibung entsteht die gewünschte Dämpfung, die die Auslenkungen des Spannhebels 14 entgegen der Spannrichtung begrenzt.

Die auftretende Reibung und die Federkraft der Spiralfeder 24 wirken in gleicher Richtung, so daß ein Überschwingen des Spannsystems entgegen der Zuspannrichtung durch den Treibriemen erschwert wird.

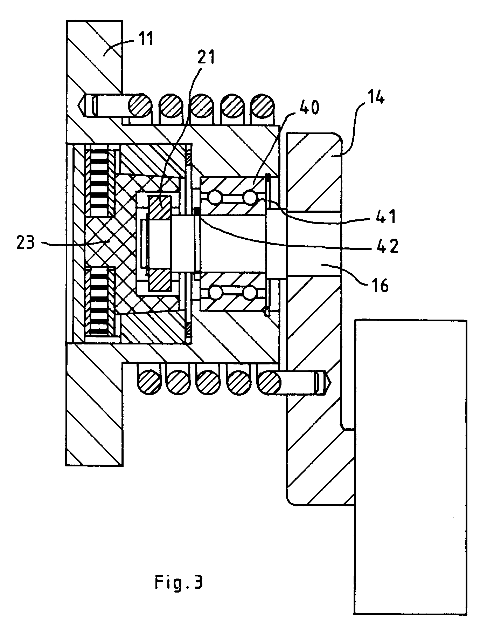

Die in Fig. 3 dargestellte Spannvorrichtung weist eine modifizierte Lagerung der Welle 16 des Spannhebels 14 auf. Die Welle 16 ist im Gehäuse 11 in einem Doppelrillen-Schrägkugellager 40 drehbar und axial lagegesichert angeordnet.

Der erste Reibkörper 23 ist topfförmig ausgebildet. Die Welle 16 des Spannhebels 14 endet in der topfförmigen Ausnehmung des ersten Reibkörpers 23. Das Doppelrillen-Schrägkugellager 40 wird über Sicherungsringe 41 und 42 axial fixiert. Die Mitnehmer 21 sind auf dem Wellenende befestigt und greifen in Ausnehmungen des ersten Reibkörpers 23 und entsprechen der Ausbildung in den Fig. 1 und 2.

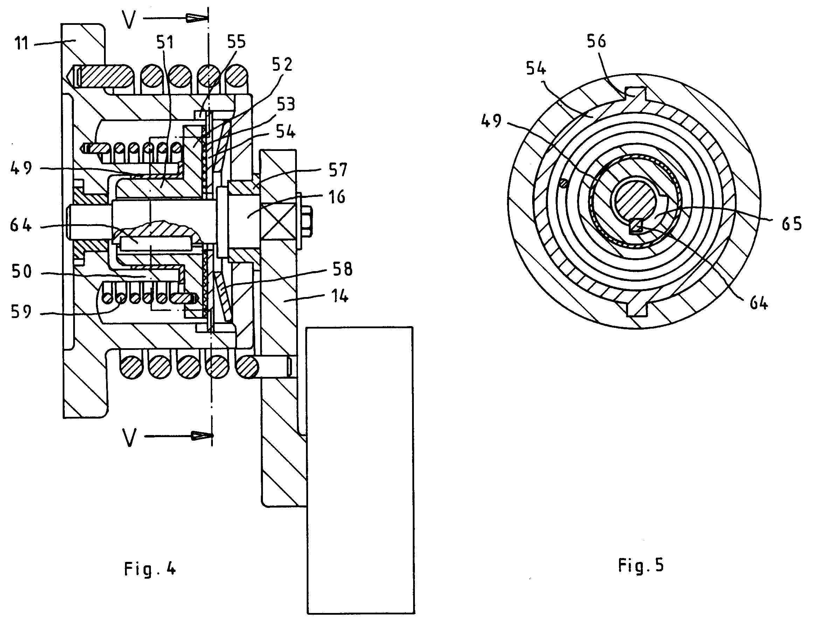

Die in Fig. 4 und 5 dargestellte Spannvorrichtung weist einen Reibungsdämpfer auf, der eine über ein Gleitlager 49 in einer Gehäusenabe 50 drehbar gelagerte Trägerbuchse 51 hat. Durch die Axialbohrung der Trägerbuchse 51 hindurch ragt die Welle 16 des Spannhebels 14, die an ihrem freien Ende in einer Gleitbuchse 57 im Gehäuse 11 gelagert ist.

Die Trägerbuchse 51 weist einen Flansch 52 auf. Der Stirnfläche des Flansches 52 liegt eine koaxiale Reibscheibe 54 gegenüber, auf der ein Reibbelag 53 befestigt ist. Die Reibscheibe 54 wird über in Gehäusenuten 55 geführte, achsparallel verlaufende Absätze 56 an einer Drehung gehindert.

Die Reibscheibe 54 wird von einer Tellerfeder 58 beaufschlagt. Dadurch wird der Reibbelag 53 gegen die Stirnfläche des Flansches 52 gepreßt. Ein auftretender Verschleiß zwischen dem Reibbelag 53 und dem Flansch 52 wird dadurch axial kompensiert.

Die als erster Reibkörper wirkende Trägerbuchse 51 wird durch eine Schraubenfeder 59 in Zuspannrichtung der Welle 16 nachgedreht. Die Schraubenfeder 59 stützt sich im Gehäuse 11 ab. Die Welle 16 weist eine Paßfeder 64 auf, die in eine axiale, innere Umfangsausnehmung 65 der Trägerbuchse 51 faßt, wobei die Umfangslänge der Ausnehmung 65 wesentlich größer ist als die Paßfeder 64. Die Paßfeder 64 liegt im stabilen Zustand einseitig an der Wand der Ausnehmung 65 an und dient als Mitnehmer für die Trägerbuchse 51 in Dämpfungsrichtung.

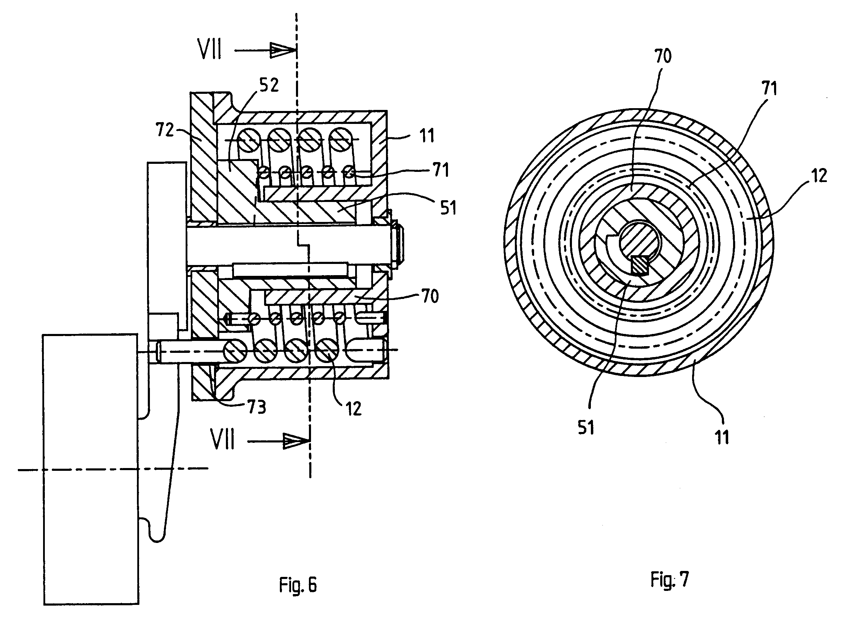

Die in den Fig. 6 und 7 dargestellte Spannvorrichtung weist einen Reibungsdämpfer auf, der ebenfalls mit einer Trägerbuchse 51 als erstem Reibkörper ausgestattet ist. Die Trägerbuchse 51 ist aus Kunststoff und in einem hohlzylindrischen Lageransatz 70 im Gehäuse 11 axial verschiebbar und drehbar gelagert und an dieser Stelle gleitfähig gemacht. Eine entsprechend gewickelte Rückstellfeder 71 ist einerseits im Gehäuse 11 befestigt und mit dem anderen Ende im Flansch 52 der Trägerbuchse 51 angeordnet. Die erste Wicklung der Rückstellfeder 71 liegt auf ihrem vollen Umfang durch entsprechende geneigte Ausführung des Flansches 52 an.

Der Flansch 52 liegt direkt an der Gehäusewand 72 flächig an. Durch eine entsprechend gewählte Werkstoffpaarung für die Trägerbuchse 51 und die Gehäusewand 72 kann eine geeignete Reibpaarung erzielt werden, so daß auf einen separaten Reibbelag verzichtet werden kann.

Die Spannfeder 12 ist im Gehäuse 11 angeordnet. Das mit dem Spannhebel 14 verbundene Ende der Spannfeder 12 ragt durch einen kreisbogenförmigen Schlitz 73 in der Gehäusewand 72.

Die Rückstellfeder 71 ist derart gewickelt, daß durch sie die Anpreßkraft zur Reibungserzeugung und die Drehbelastung der Trägerbuchse 51 aufgebracht wird. Die Rückstellfeder 71 wird zugleich als Druck- und Torsionsfeder eingesetzt. Der zweite, gegen Drehung gesicherte Reibkörper ist das Gehäuse selbst.

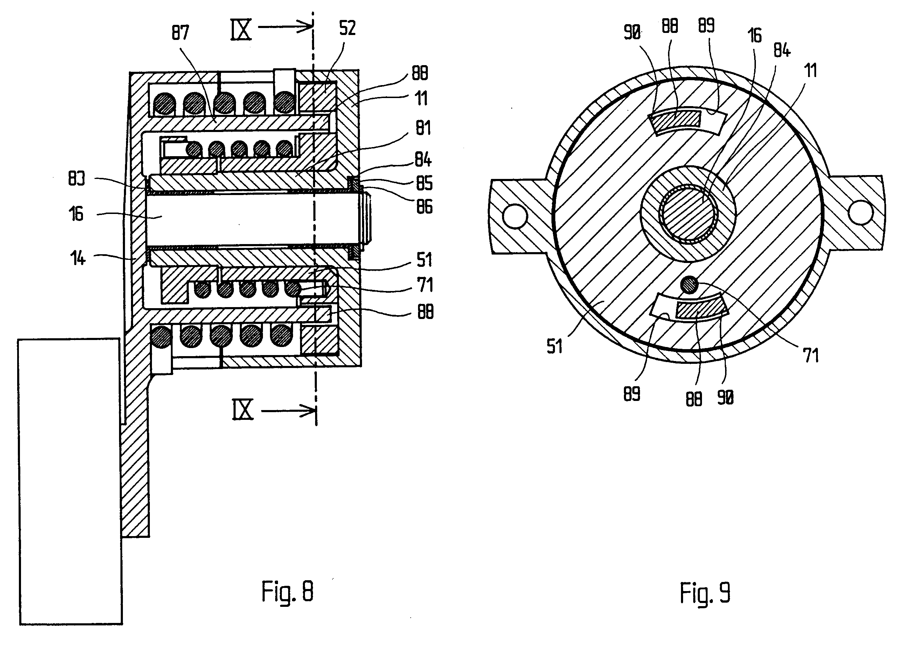

Die in den Fig. 8 und 9 dargestellte Spannvorrichtung weist ebenfalls eine Trägerbuchse 51 als erstem Reibkörper auf. Diese Trägerbuchse 51 ist auf einer hohlen Gehäusenabe 81 des feststehenden Gehäuses 11 drehbar gelagert. Auf das Ende der Gehäusenabe 81 ist eine Bundbuchse 82 fest aufgepreßt. Zwischen der Bundbuchse 82 und dem Flansch 52 der Trägerbuchse 51 ist eine Rückstellfeder 71 vorgespannt eingesetzt. Die Gehäusenabe 81 nimmt die über Gleitbuchsen 83 und 84 gelagerte Welle 16 des Spannhebels 14 auf. Der Spannhebel 14 ist über eine Scheibe 85 und einen Wellensicherungsring 86 im Gehäuse 11 lagegesichert. Konzentrisch zu der Welle 16 trägt der Spannhebel 14 einen in das Gehäuse 11 ragenden Hülsenansatz 87. An dem stirnseitigen Ende des Hülsenansatzes 87 befinden sich zwei diametral gegenüberliegende Verlängerungen 88, die in kreisringförmige Abschnittsausnehmungen 89 des Flansches 52 der Trägerbuchse 51 ragen.

Wie aus der Fig. 9 ersichtlich ist, liegen die Verlängerungen 88 als radial wirkende Mitnehmer gegen die seitlichen Enden 90 der Abschnittsausnehmungen 89 an. In Zuspannrichtung des Treibriemens liegen die Verlängerungen 88 frei und können somit der Zuspannrichtung ungehindert folgen. Entgegen der Zuspannrichtung bewirken die anliegenden Verlängerungen 88 ein Verdrehen der Trägerbuchse 51 als erstem Reibkörper. Der zweite, gegen Drehung gesicherte Reibkörper ist das Gehäuse 11 selbst.

### Bezugszeichenliste

- 11: Gehäuse
- 12: Spannfeder
- 14: Spannhebel
- 15: Spannrolle
- 16: Welle
- 17: Zentralbohrung
- 18: Gleitbuchse
- 19: Wellenabschnitt
- 20: Ring
- 21: Mitnehmer
- 22: kreisringförmige Abschnittsausnehmungen
- 23: Reibkörper, erster
- 24: Spiralfeder
- 25: Stufenbohrung
- 26: konische Außenmantelfläche
- 28: Reibkörper, zweiter
- 29: Wellfederscheibe
- 30: kreisringsektorförmige Vorsprünge
- 31: Führungsleisten
- 32: axiale Ausnehmungen
- 34: Anlaufscheibe
- 35: Anlaufscheibe
- 36: Gehäusedeckel
- 37: Sicherungsscheibe
- 40: Doppelrillen-Schrägkugellager
- 41: Sicherungsring
- 42: Sicherungsring
- 49: Gleitlager
- 50: Gehäusenabe
- 51: Trägerbuchse
- 52: Flansch
- 53: Reibbelag
- 54: Reibscheibe
- 55: Gehäusenaben
- 56: Absätze
- 57: Gleitbuchse
- 58: Tellerfeder
- 59: Schraubenfeder
- 64: Paßfeder
- 65: Umfangsausnehmung
- 70: hohlzylindrischer Lageransatz
- 71: Rückstellfeder
- 72: Gehäusewand
- 73: kreisbogenförmiger Schlitz
- 81: Gehäusenabe
- 82: Bundbuchse
- 83: Gleitbuchse
- 84: Gleitbuchse
- 85: Scheibe
- 86: Wellensicherungsring
- 87: Hülsenansatz
- 88: Verlängerungen
- 89: Abschnittsausnehmungen
- 90: seitliche Enden

## Patentansprüche

1. Vorrichtung zum Spannen von Treibriemen oder Antriebsketten mit einer Spannfeder (12) zum Anpressen eines über eine Welle (16) drehbar in einem Gehäuse (11) gelagerten Spannhebels (14) gegen den Treibriemen und einer Dämpfungsanordnung, die bei Schwenkbewegungen des Spannhebels entgegen der Spannrichtung wirksam wird, wobei der Spannhebel einen ersten Reibkörper (23, 51) verdreht, der an einen zweiten, gegen Verdrehung gesicherten Reibkörper (28, 11) angepreßt ist,
**gekennzeichnet durch folgende Merkmale:**
- der Spannhebel (14) weist mindestens einen mit der Lagerachse des Spannhebels (14) drehfest verbundenen Mitnehmer (21, 88) auf, der in eine konzentrische, kreisringförmige Abschnittsausnehmung (22, 89) des ersten, koaxialen Reibkörpers (23, 51) ragt,
- der erste Reibkörper (23, 51) ist in Spannrichtung des Spannhebels (14) auf Drehung federbelastet,
- der Mitnehmer (21, 88) liegt einseitig in Dämpfungsrichtung der Welle (16) gegen das seitliche Ende der kreisringförmigen Abschnittsausnehmung (32, 89) des ersten Reibkörpers (23, 51) an,
- in entgegengesetzter, der Spannrichtung entsprechender Drehrichtung ist der Mitnehmer (21) relativ zum ersten Reibkörper (23, 51) frei verdrehbar,
- das auf den ersten Reibkörper (23, 51) wirkende Drehmoment der Federbelastung ist größer als das zwischen erstem und zweitem Reibkörper (28, 11) herrschende Reibmoment.

2. Vorrichtung nach Anspruch 1,
gekennzeichnet durch folgende Merkmale:
- die Welle (16) des Spannhebels (14) weist einen radialen Mitnehmer (21) auf, der innerhalb einer zentrischen Ausnehmung des ersten, koaxialen Reibkörpers (23) angeordnet ist,
- der Mitnehmer (21) liegt einseitig in Dämpfungsrichtung der Welle (16) gegen einen inneren, segmentartigen Vorsprung (30) des ersten Reibkörpers (23) an.

3. Vorrichtung nach Anspruch 2,
gekennzeichnet durch folgende Merkmale:
- die Welle (16) erstreckt sich in oder durch eine Zentralbohrung (17)des ersten Reibkörpers (23) und weist im Bereich des ersten Reibkörpers (23) einen über den Umfang der Welle (16) herausragenden Mitnehmer (21) auf,
- der Mitnehmer (21) greift in eine Ausnehmung (22) der Stufenbohrung (25) des ersten Reibkörpers (23) ein, die in umfänglicher Erstreckung erheblich größer ist als der Mitnehmer (21).

4. Vorrichtung nach Anspruch 2 oder 3, dadurch gekennzeichnet, daß die beiden Reibkörper (23, 28) zwei ineinandergesteckte konische Reibhülsen sind, von denen die innere, den ersten Reibkörper (23) darstellende Reibhülse axial lagegesichert angeordnet und die zweite Reibhülse (28) in axialer Richtung gegen den Außenkonus der ersten Reibhülse (23) anpreßbar ist.

5. Vorrichtung nach einem der Ansprüche 2 bis 4, dadurch gekennzeichnet, daß der erste, auf derselben Drehachse wie die Welle (16) liegende Reibkörper (23) von einer Spiralfeder (24) auf Drehung beaufschlagt ist.

6. Vorrichtung nach einem der Ansprüche 2 bis 5, dadurch gekennzeichnet, daß die Welle (16) im Gehäuse (11) in einem Doppelrillen-Schrägkugellager (40) gelagert ist.

7. Vorrichtung nach Anspruch 1, dadurch gekennzeichnet, daß der erste Reibkörper als Trägerbuchse (51) konzentrisch auf der Welle (16) angeordnet ist und einen senkrecht zur Drehachse angeordneten Flansch (52) aufweist.

8. Vorrichtung nach Anspruch 7, dadurch gekennzeichnet, daß der zweite Reibkörper eine Reibscheibe (54) ist und gegen den Flansch (52) federbelastet ist und daß der Flansch und/oder der zweite Reibkörper eine Reibfläche aufweisen.

9. Vorrichtung nach Anspruch 7, dadurch gekennzeichnet, daß die Trägerbuchse (51) durch eine vorgespannte Schraubenfeder (59) in Spannrichtung drehbeaufschlagt ist.

10. Vorrichtung nach Anspruch 7, dadurch gekennzeichnet, daß die Trägerbuchse (51) durch eine Rückstellfeder (71) axial und in Umfangsrichtung beaufschlagt ist und daß der Flansch (52) gegen eine Wand (72) des Gehäuses (11) anliegt.

11. Vorrichtung nach Anspruch 10, dadurch gekennzeichnet, daß der federseitige Bereich des Flansches (52) entsprechend der Wicklungssteigung der Rückstellfeder (71) geformt ist.

12. Vorrichtung nach Anspruch 7,
gekennzeichnet durch folgende Merkmale:
- im Flansch (52) der Trägerbuchse (51) sind konzentrische, kreisringförmige Ausnehmungsabschnitte (89) angeordnet,
- der Spannhebel (14) weist einen konzentrisch zu seiner Welle (16) angeordneten Hülsenansatz (87) auf, der in das Gehäuse (11) ragt,
- der Hülsenansatz (87) trägt an seiner Stirnseite lokale Verlängerungen (88),
- die Verlängerungen (88) ragen in die Ausnehmungsabschnitte (89) des Flansches (52).

## Claims

1. Apparatus for tensioning transmission belts or drive chains, including a tensioning spring (12) for pressing a tensioning lever (14) against the drive belt, said lever being mounted in a housing (11) so as to be rotatable via a shaft (16), and a vibration damping arrangement which becomes effective when the tensioning lever executes pivotal movements in opposition to the tensioning direction, the tensioning lever twisting round a first friction body (23, 51), which is pressed against a second friction body (28, 11), which is prevented from twisting, characterised by the following features:
- the tensioning lever (14) has at least one entrainment means (21, 88), which is non-rotatably connected to the bearing shaft of the tensioning lever (14) and protrudes into a concentric, circular ring-shaped sector recess (22, 89) in the first, coaxial friction body (23, 51);
- the first friction body (23, 51) is spring-loaded for rotation in the tensioning direction of the tensioning lever (14);
- the entrainment means (21, 88) abuts unilaterally in the damping direction of the shaft (16) against the lateral end of the circular ring-shaped sector recess (22, 89) in the first friction body (23, 51);
- the entrainment means (21) is freely rotatable relative to the first friction body (23, 51) in the opposite direction of rotation corresponding to the tensioning direction; and
- the torque of the spring loading, acting on the first friction body (23, 51), is greater than the frictional moment prevailing between the first friction body and second friction body (28, 11).

2. Apparatus according to claim 1, characterised by the following features:
- the shaft (16) of the tensioning lever (14) has a radial entrainment means (21), which is disposed internally of a central recess in the first, coaxial friction body (23); and
- the entrainment means (21) abuts unilaterally in the damping direction of the shaft (16) against an inner, segment-like projection member (30) of the first friction body (23).

3. Apparatus according to claim 2, characterised by the following features:
- the shaft (16) extends in or through a central bore (17) in the first friction body (23) and has, in the region of the first friction body (23), an entrainment means (21) protruding beyond the periphery of the shaft (16); and
- the entrainment means (21) engages in a recess (22) in the stepped bore (25) in the first friction body (23), said recess being considerably greater in respect of its circumferential extent than the entrainment means (21).

4. Apparatus according to claim 2 or 3, characterised in that the two friction bodies (23, 28) are two conically tapering friction sleeves, which have been fitted into each other, the inner friction sleeve of said sleeves constituting the first friction body (23) and being secured in an axial position, and the second friction sleeve (28) being pressable against the external cone of the first friction sleeve (23) in the axial direction.

5. Apparatus according to one of claims 2 to 4, characterized in that the first friction body (23), lying on the same axis of rotation as the shaft (16), is caused to rotate by a helical spring (24).

6. Apparatus according to one of claims 2 to 5, characterised in that the shaft (16) is mounted in the housing (11) in a double-grooved inclined ball bearing (40).

7. Apparatus according to claim 1, characterized in that the first friction body is provided as a supporting bush (51) concentrically on the shaft (16) and has a flange (52) disposed perpendicular to the rotary axis.

8. Apparatus according to claim 7, characterised in that the second friction body is a friction disc (54) and is spring-loaded against the flange (52), and in that the flange and/or the second friction body have a frictional area.

9. Apparatus according to claim 7, characterised in that the supporting bush (51) is caused to rotate in the tensioning direction by an initially tensioned helical spring (59).

10. Apparatus according to claim 7, characterized in that a return spring (71) acts upon the supporting bush (51) axially and in the circumferential direction, and in that the flange (52) abuts against a wall (72) of the housing (11).

11. Apparatus according to claim 10, characterized in that the region of the flange (52) facing the spring is configured to correspond to the coil pitch of the return spring (71).

12. Apparatus according to claim 7, characterized by the following features:
- concentric, circular ring-shaped recess portions (89) are disposed in the flange (52) of the carrier bush (51);
- the tensioning lever (14) has a sleeve attachment (87), which is disposed concentrically relative to its shaft (16) and protrudes into the housing (11);
- the sleeve attachment (87) is provided on its end face with local extension members (88); and
- the extension members (88) protrude into the recess portions (89) of the flange (52).

## Revendications

1. Dispositif pour tendre des courroies de transmission ou chaînes d'entraînement, comprenant un ressort de tension (12) servant à presser contre la courroie de transmission un levier de tension (14) monté rotatif dans un carter (11) au moyen d'un arbre (16), et un dispositif amortisseur qui entre en action en présence de mouvements d'oscillation du levier de tension en sens inverse de la tension, dans lequel le levier de tension fait tourner un premier corps de friction (23, 51) qui est lui-même pressé contre un deuxième corps de friction (28, 11) immobilisé en rotation,
caractérisé par les caractéristiques suivantes :
- le levier de tension (14) présente au moins un doigt d'entraînement (21, 88) solidaire en rotation de l'axe de portée du levier de tension (14) et qui est engagé dans un évidement concentrique en segment (22, 89), en forme de couronne de cercle, du premier corps de friction coaxial (23, 51),
- le premier corps de friction (23, 51) est sollicité élastiquement pour tourner dans le sens de la tension du levier de tension (14),
- le doigt d'entraînement (21, 88) est appuyé unilatéralement dans le sens de l'amortissement de l'arbre (16), contre l'extrémité latérale de l'évidement en segment (32, 89) en forme de couronne de cercle du premier corps de friction (23, 51),
- tandis que, dans le sens de rotation inverse, qui correspond au sens de la tension, le doigt d'entraînement (21) peut tourner librement par rapport au premier corps de friction (23, 51),
- le couple de la sollicitation élastique qui agit sur le premier corps de friction (23, 51) est plus grand que le couple de friction qui s'exerce entre les premier et deuxième corps de friction (28, 11).

2. Dispositif selon la revendication 1,
caractérisé par les caractéristiques suivantes :
- l'arbre (16) du levier de tension (14) présente un doigt d'entraînement radial (21) qui est disposé à l'intérieur d'un évidement central du premier corps de friction coaxial (23),
- le doigt d'entraînement (21) est appuyé unilatéralement dans le sens de l'amortissement de l'arbre (16) contre une saillie intérieure (30), en forme de segment, du premier corps de friction (23).

3. Dispositif selon la revendication 2,
caractérisé par les caractéristiques suivantes :
- l'arbre (16) s'étend dans ou à travers un perçage central (17) du premier corps de friction (23) et présente, dans la région du premier corps de friction (23), un doigt d'entraînement (21) qui fait saillie au-delà de la circonférence de l'arbre (16),
- le doigt d'entraînement (21) est engagé dans un évidement (22) du perçage étagé (25) du premier corps de friction (23), perçage qui est beaucoup plus grand que le doigt d'entraînement (21) en dimension circonférentielle.

4. Dispositif selon la revendication 2 ou 3, caractérisé en ce que les deux corps de friction (23, 28) sont deux bagues de friction coniques emboîtées l'une à l'intérieur de l'autre, dont la bague de friction intérieure, qui représente le premier corps de friction (23), est disposée bloquée en position dans la direction axiale, et la deuxième bague de friction (28) peut être pressée dans la direction axiale contre le cône extérieur de la première bague de friction (23).

5. Dispositif selon une des revendications 2 à 4, caractérisé en ce que le premier corps de friction (23), qui est situé sur le même axe de rotation que l'arbre (16), est sollicité en rotation par un ressort spiral (24).

6. Dispositif selon une des revendications 2 à 5, caractérisé en ce que l'arbre (16) tourillonne dans le carter (11) dans un roulement à billes (40) à charge oblique à double rangée de billes.

7. Dispositif selon la revendication 1, caractérisé en ce que le premier corps de friction est monté concentriquement sur l'arbre (16) pour former une douille porteuse (51) et présente une collerette (52) disposée perpendiculairement à l'axe de rotation.

8. Dispositif selon la revendication 7, caractérisé en ce que le deuxième corps de friction est une rondelle de friction (54) et est pressé contre la collerette (52) par un ressort et en ce que la collerette et/ou le deuxième corps de friction présentent une surface de friction.

9. Dispositif selon la revendication 7, caractérisé en ce que la douille porteuse (51) est sollicitée en rotation dans le sens de la tension par un ressort hélicoïdal (59) tendu au repos.

10. Dispositif selon la revendication 7, caractérisé en ce que la douille porteuse (51) est sollicitée axialement et dans la direction circonférentielle par un ressort de rappel (71) et en ce que la collerette (52) est appuyée contre une paroi (72) du carter (11).

11. Dispositif selon la revendication 10, caractérisé en ce que la région côté ressort de la collerette (52) présente une forme correspondant au pas de l'enroulement du ressort de rappel (71).

12. Dispositif selon la revendication 7,
caractérisé par les caractéristiques suivantes :
- des évidements concentriques en segment (89), en forme de couronne de cercle, sont prévus dans la collerette (52) de la douille porteuse (51),
- le levier de tension (14) présente une saillie en forme de douille (87) disposée concentriquement à son arbre (13), et qui s'engage dans le carter (11),
- la saillie en forme de douille (87) porte des prolongements locaux (88) sur sa face frontale,
- les prolongements (88) sont engagés dans les évidements en segment (88) de la collerette (52).
